# EUROPEAN PATENT APPLICATION

(11) **EP 2 276 042 A2**
(43) Date of publication of application: **19.01.2011**
(21) Application number: 10169880.1
(22) Date of filing: 16.07.2010
(51) Int. Cl.: H01C 7/112

(54) **Process for producing a zinc oxide (ZnO) varistor**

(30) Priority: 17.07.2009 CN 200910160014
(71) Applicant: SFI Electronics Technology Inc., Guishan Shiang T'ao yuan (TW)
(72) Inventor: Lien, Ching-Hohn, Taipei (TW); Zhu, Jie-An, Taoyuan County (TW); Kuo, Cheng-Tsung, Taoyuan County (TW); Lin, Jiu-Nan, Taoyuan County (TW); Xu, Zhi-Xian, Taoyuan County (TW); Xu, Hong-Zong, Taoyuan County (TW); Fang, Ting-Yi, Taoyuan County (TW); Huang, Xing-Xiang, Taoyuan County (TW)
(74) Representative: Beck & Rössig European Patent Attorneys

(57) **Abstract**

A process for producing zinc oxide varistors is to perform the doping of zinc oxide and the sintering of zinc oxide grains with a high-impedance sintering material through two independent procedures, so that the doped zinc oxide and the high-impedance sintering material are well mixed in a predetermined ratio and then used to make the zinc oxide varistors through conventional technology by low-temperature sintering (lower than 900°C); the resultant zinc oxide varistors may use pure silver as inner electrode and particularly possess one or more of varistor properties, thermistor properties, capacitor properties, inductor properties, piezoelectricity and magnetism.

## Description

### BACKGROUND OF THE INVENTION

### 1. Field of the Invention

The present invention relates to a process for producing zinc oxide (ZnO) varistors, more particularly to a novel method of making zinc oxide (ZnO) varistors through two independent procedures to perform the doping of zinc oxide and the sintering of zinc oxide grains with a high-impedance sintering material respectively.

### 2. Description of Prior Art

Traditionally, a ZnO varistor is made by sintering zinc oxide, together with other oxides, such as bismuth oxide, antimony oxide, silicon oxide, cobalt oxide, manganese oxide and chrome oxide, at a temperature higher than 1000°C. During sintering, semi-conductivity of the ZnO grains increases due to the doping of Bi, Sb, Si, Co, Mn and Cr while a high-impedance grain boundary layer of crystalline phase is deposited among the ZnO grains.

Therefore, the conventional process for producing ZnO varistors is to utilize a single sintering procedure to accomplish two purposes. One involves growth of ZnO grains and doping ZnO with ions to enhance semi-conductivity of the ZnO grains while the other involves depositing the high-impedance grain boundary layer that encapsulates the ZnO grains to endow the resultant ZnO varistors with non-ohmic characteristics.

In other words, the conventional ZnO varistor principally depends on the semi-conductivity of ZnO grains and the high-impedance grain boundary layer among the ZnO grains to present its surge-absorbing ability, thus possessing superior non-ohmic characteristics and better current impact resistance.

The above-mentioned conventional process that resorts to the single sintering procedure for grain doping and high-impedance grain boundary layer forming nevertheless has its defects. That is, formation of the high-impedance grain boundary layer in the above-mentioned conventional process requires a relatively high sintering temperature. On the other hand, properties of the resultant ZnO varistor are less adjustable. For example, in the sintering procedure, the applicable species and quantity of ions for doping ZnO grains are relatively restricted. Consequently, properties of the resultant ZnO varistor, including breakdown voltage, nonlinear coefficient, C value, leakage current, surge-absorbing ability, and ESD-absorbing ability, are restricted. Similarly, in the sintering procedure, formation of the high-impedance grain boundary layer of crystalline phase among the ZnO grains also faces restriction. Hence, because selectiveness of composition and quantity of the high-impedance grain boundary layer is limited, improvement in technical conditions of the resultant ZnO varistors is unachievable and properties of the resultant ZnO varistors are rather inflexible.

Prior art also includes US Patent No. 4,767,729 which discloses a process for the preparation of a voltage-dependent ceramic resistance based on ZnO, and other oxides selected from the group of addition elements Co, Mn, Cr, Ni, Ba, Bi, Sb, rare earths, Al, B, Si, Ga and Ti and to a resistance based on ZnO and other oxides of the group of addition elements Co, Mn, Cr, Ni, Ba, Si, Sb, rare earths, Al, B, Si, Ga, and Ti.

US Patent No. 5,614,138 is another known prior art which discloses a method of manufacturing a voltage nonlinear resistor comprising the following sequential steps: preparing a calcinated mixture of metallic oxides which form mainly grain boundaries when mixed with and reacted with zinc oxide;
forming a composite mixture by mixing said calcinated mixture of metal oxides with zinc oxide as a main component and with a grain growth suppressing oxide which suppresses grain growth of zinc oxide when sintered;
granulating said composite mixture to form a granulated mixture, and sintering said granulated mixture.

US Patent No. 5,234,641 is further another known prior art which discloses a method of manufacturing an improved visitor which ceramic layers of the varistor are formed by providing at least two strata separated by a boundary layer which resists grain growth thereacross. The ceramic body is sintered under temperature conditions sufficiently low that grain growth within the strata defining the ceramic layers is restricted to the strata such that grain growth across the boundary material is minimized.

### SUMMARY OF THE INVENTION

In view of the shortcomings of the prior art, one primary objective of the present invention is to provide a process for producing zinc oxide varistors through two independent procedures to perform the doping of zinc oxide and the sintering of zinc oxide grains with a high-impedance sintering material respectively. The process for producing zinc oxide varistors comprises:
a) preparing doped ZnO grains that possess sufficient semi-conductivity;
b) preparing a high-impedance sintering material (or glass powder) separately;
c) mixing the doped ZnO grains and the high-impedance sintering material in a predetermined ratio to form a mixture, and
d) using the mixture to make zinc oxide varistors through the known conventional technology.

By implementing the process of the present invenion, species as well as quantity of the doping ions of the doped ZnO grains, and composition as well as preparation conditions of the high-impedance sintering material (or glass powder) can be independently designed by according to desired properties and processing requirements of the resultant zinc oxide varistors, such as breakdown voltage, nonlinear coefficient, C value, leakage current, surge-absorbing ability, ESD-absorbing ability, and permeability, or by according to preparation conditions of low-temperature sintering to realize zinc oxide varistors with various desired properties.

Hence, the process of the present invention allows enhanced adjustability to properties of the resultant zinc oxide varistors, thereby meeting diverse practical needs.

### BRIEF DESCRIPTION OF THE DRAWINGS

The invention as well as a preferred mode of use, further objectives and advantages thereof will be best understood by reference to the following detailed description of illustrative embodiments when acquire in conjunction with the accompanying drawings, wherein:
FIG. 1 shows the X-ray diffraction pattern of ZnO;
FIG. 2 shows the X-ray diffraction pattern of ZnO doped with 2mol% of Si;
FIG. 3 shows the X-ray diffraction pattern of ZnO doped with 2mol% of W;
FIG. 4 shows the X-ray diffraction pattern of ZnO doped with 2mol% of V;
FIG. 5 shows the X-ray diffraction pattern of ZnO doped with 2mol% of Fe;
FIG. 6 shows the X-ray diffraction pattern of ZnO doped with 2mol% of Sb;
FIG. 7 shows the X-ray diffraction pattern of ZnO doped with 2mol% of Sn;
FIG. 8 shows the X-ray diffraction pattern of ZnO doped with 2mol% of In;
FIG. 9 shows the X-ray diffraction pattern of ZnO doped with 2mol% of Y;
FIG. 10 is a resistance-temperature graph of Si-doped Zn-X144 sintered with 5% of G1-08 sintering material;
FIG. 11 is a resistance-temperature graph of Ag-doped Zn-X141 sintered with 5% of G1-38 sintering material; and
FIG.12 is a schematic drawing showing a dual-function element made from materials of Formula A and Formula B.

### DETAILED DESCRIPTION OF THE PREFERRED EMBODIMENT

According to the present invention, a process for producing zinc oxide varistors comprises the following steps: a) preparing doped ZnO grains that are doped with doping ions; b) preparing a high-impedance sintering material or glass powder; c) mixing the ZnO grains of a) and the high-impedance sintering material of b) to from a mixture; and d) processing the mixture of c) to produce the resultant ZnO varistors, which steps will be expounded hereinafter.

### a. Preparing ZnO Grains Doped with Doping Ions

A solution containing zinc ions and another solution containing doping ions are prepared based on the principles of crystallography. Then nanotechnology, such as the coprecipitation method or the sol-gel process, is applied to obtain a precipitate. The precipitate then undergoes thermal decomposition so that ZnO grains doped with the doping ions are obtained.

The ZnO grains may be doped with one or more species of ions. Therein, quantity of the doping ion(s) is preferably less than 15mol% of ZnO, more preferably less than 10mol% of Zn, and most preferably less than 2mol% of Zn.

The doping ion(s) is one or more selected from the group consisting of Ag, Li, Cu, Al, Ce, Co, Cr, In, Ga, La, Y, Nb, Ni, Pr, Sb, Se, Ti, V, W, Zr, Si, B, Fe, and Sn.

The solution containing zinc ions may be zinc acetate or zinc nitrate. The solution containing doping ions may be made by dissolving one or more species of said doping ions in acetate or nitrate.

Then the solution containing zinc ions and the solution containing doping ions are mixed and stirred to form a blended solution containing zinc ions and doping ions by means of the chemical coprecipitation method. While mixing, a surfactant or a high polymer may be added according to practical needs. Then a precipitant is added into the blended solution during stir in a co-current or counter-current manner. Through proper adjustment of the pH value of the solution, a co-precipitate is obtained. After repeatedly washed and then dried, the co-precipitate is calcined at proper temperature so that ZnO grains doped with the doping ions are obtained.

The aforementioned precipitant may be selected from the group consisting of oxalic acid, carbamide, ammonium carbonate, ammonium hydrogen carbonate, ammonia, or other alkaline solutions.

Another approach to making doped ZnO grains involves immersing fine ZnO powder into a solution containing the doping ions. After dried, the precipitate is calcined in air, or in an inter gas, such as argon gas, or in a reducing gas containing hydrogen or carbon monoxide, to form ZnO grains doped with the doping ions.

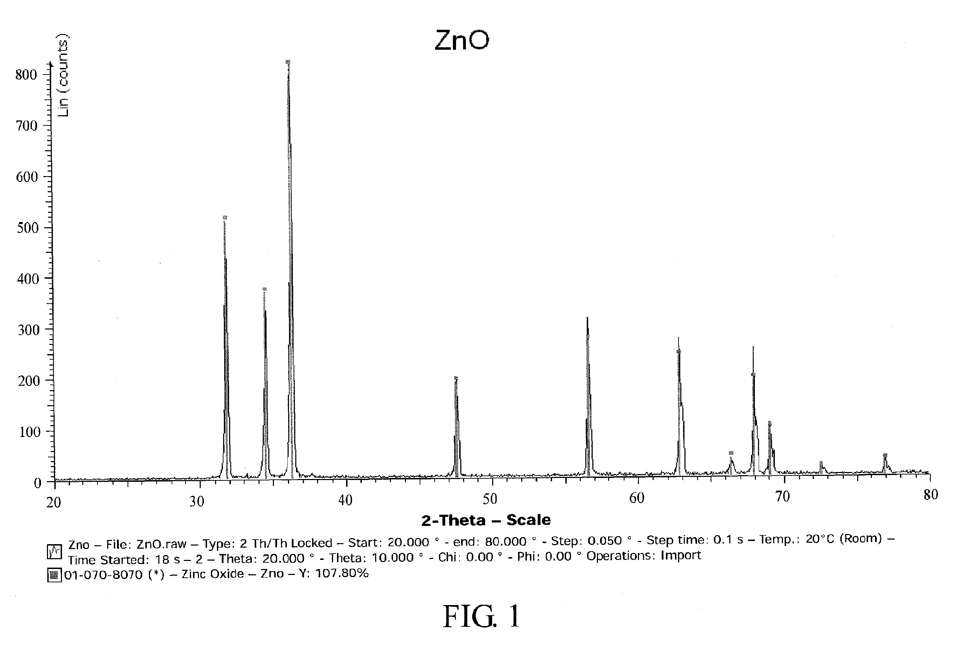

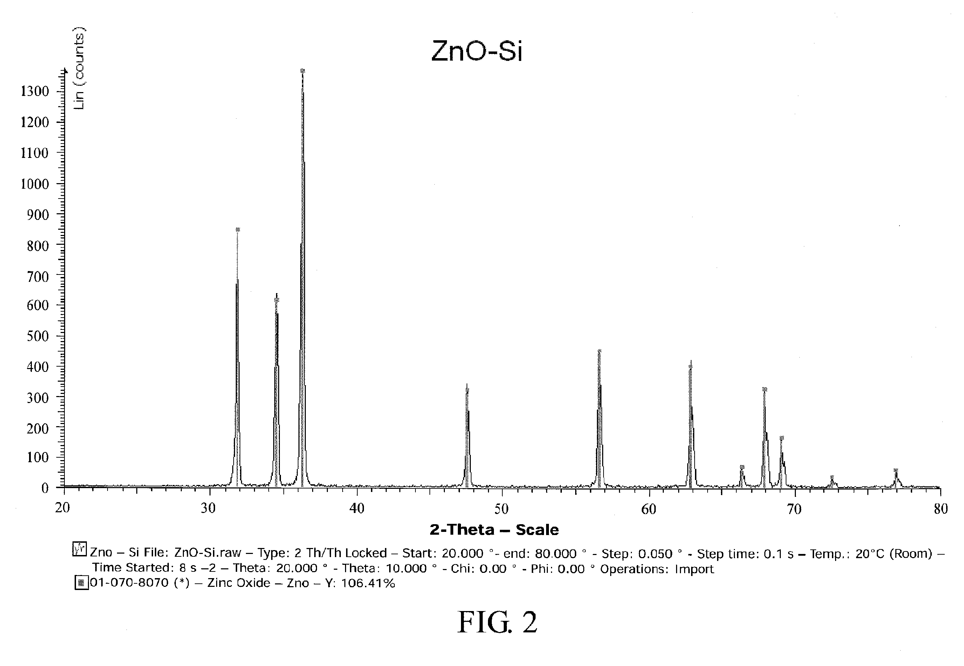

ZnO grains doped with 2mol% of Si made by any of the foregoing approaches. The X-ray diffraction pattern thereof obtained by an X-ray diffractometer is shown in FIG. 2. As compared with FIG. 1 that shows the X-ray diffraction pattern of pure ZnO grains, FIG. 2 suggests that Si ions are fully dissolved into the lattices of the ZnO grains.

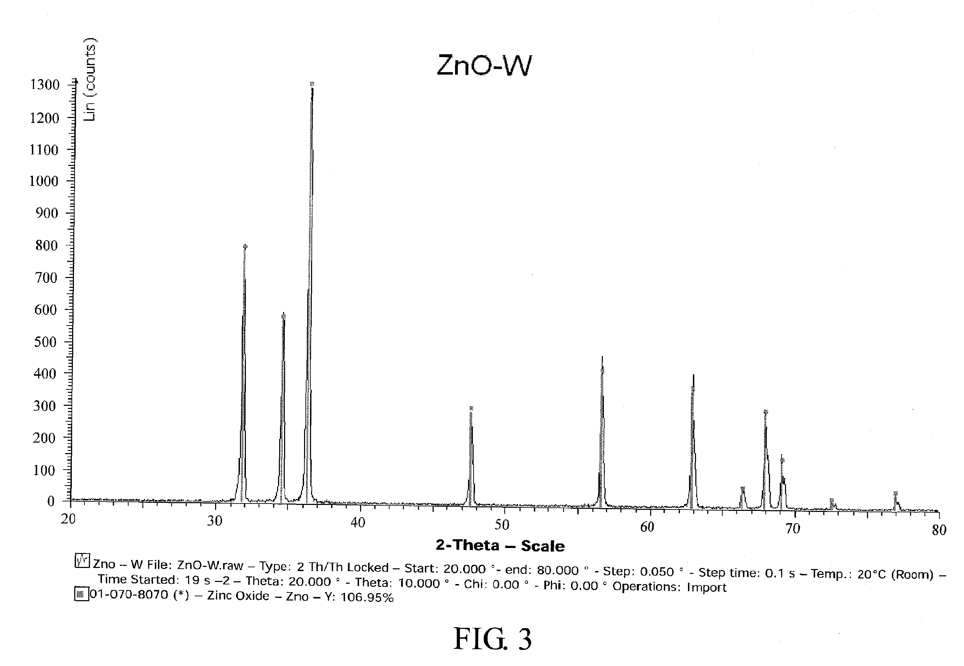

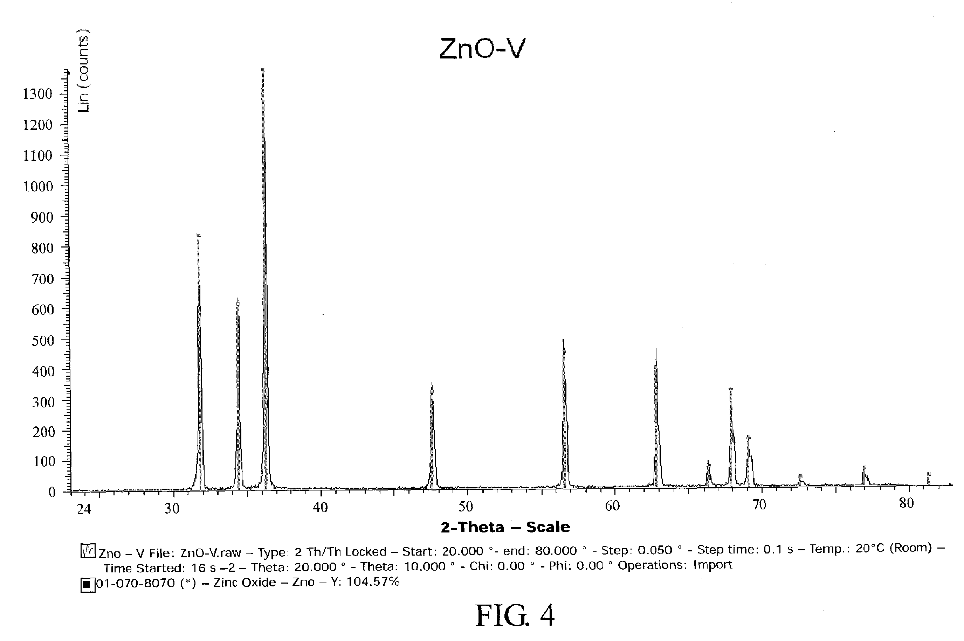

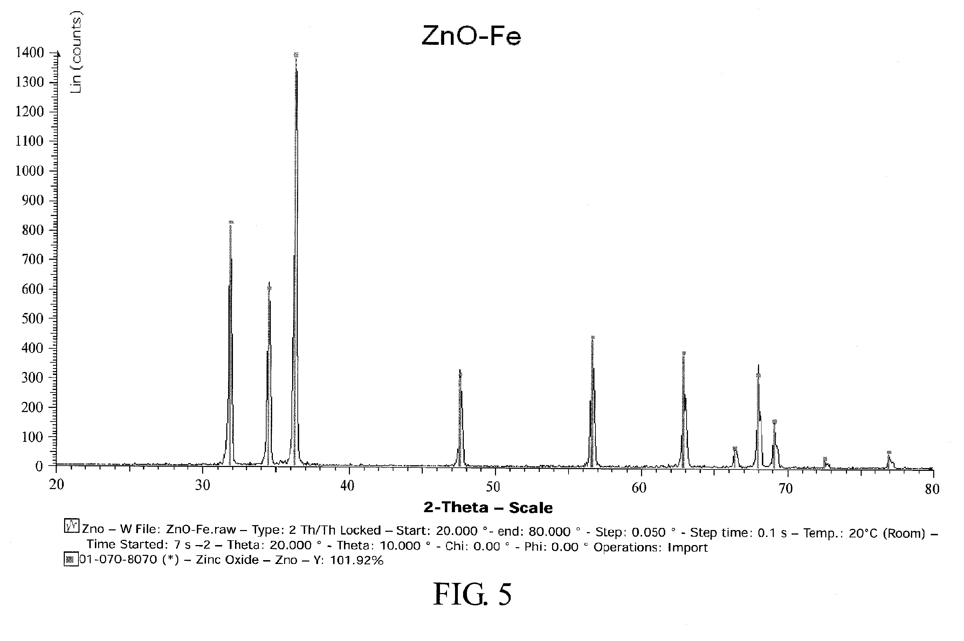

ZnO grains doped with 2mol% of W or V or Fe ions can be obtained similarly. The X-ray diffraction patterns of the ZnO grains doped with 2mol% of W ions, the ZnO grains doped with 2mol% of V ions, and the ZnO grains doped with 2mol% of Fe ions are shown in FIG. 3, FIG. 4 and FIG. 5, respectively. As compared with FIG. 1 that shows the X-ray diffraction pattern of pure ZnO grains, FIGS. 3 through 5 prove that W, V, and Fe ions are fully dissolved into the lattices of the ZnO grains.

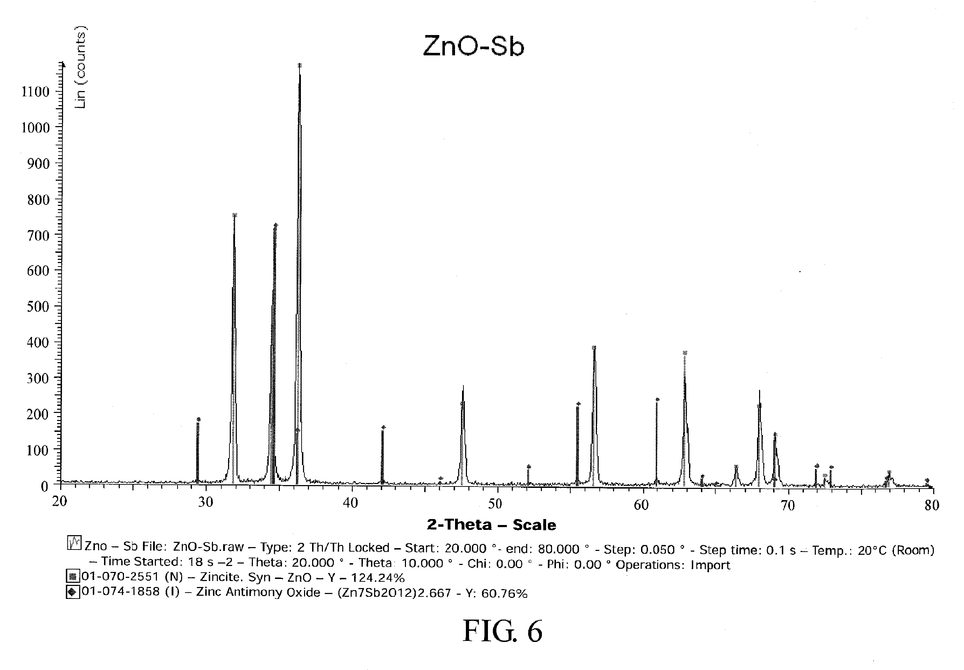

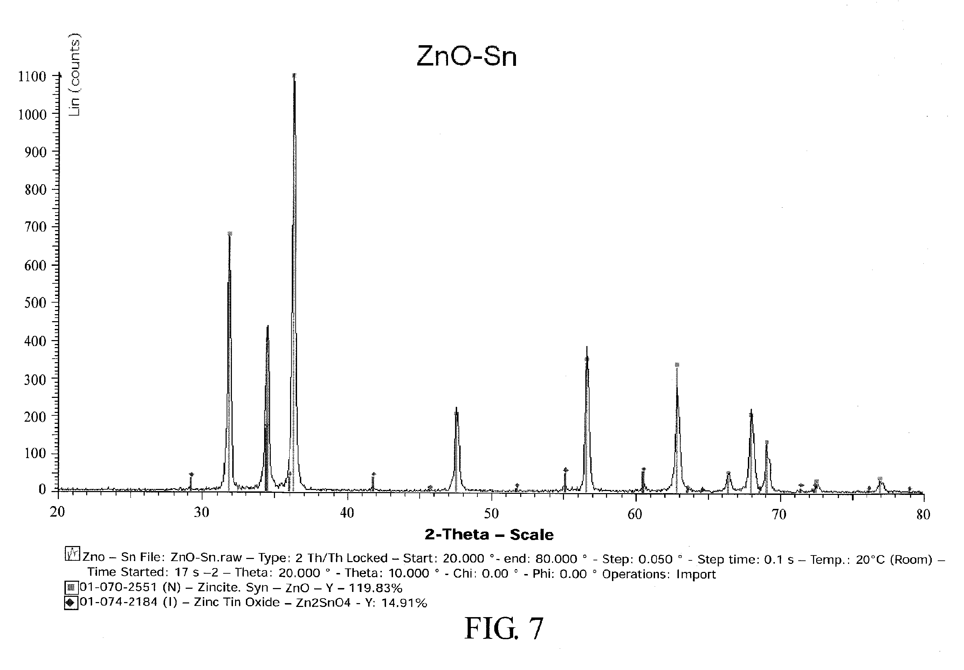

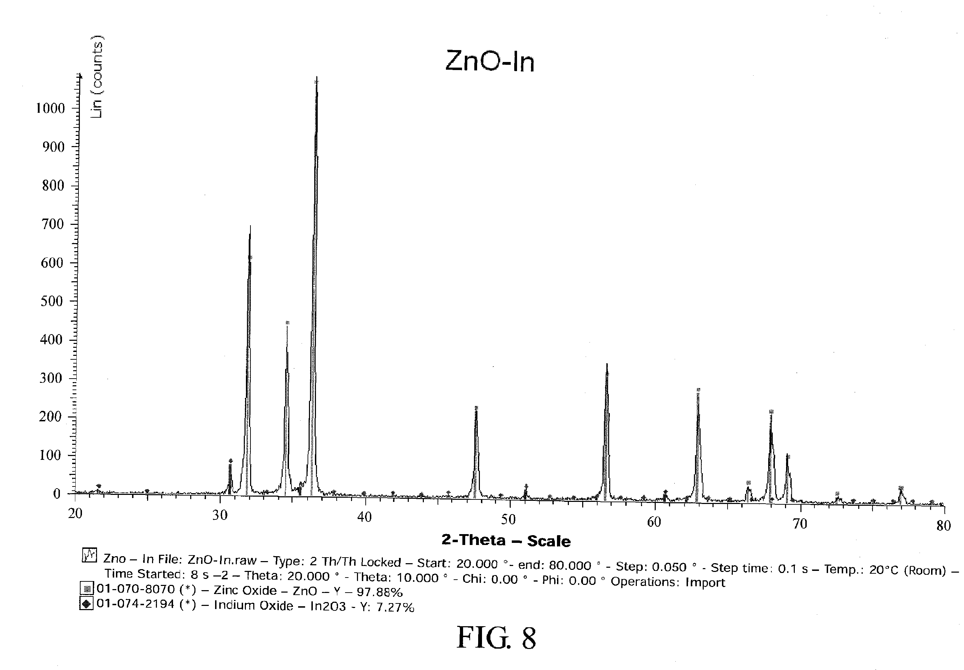

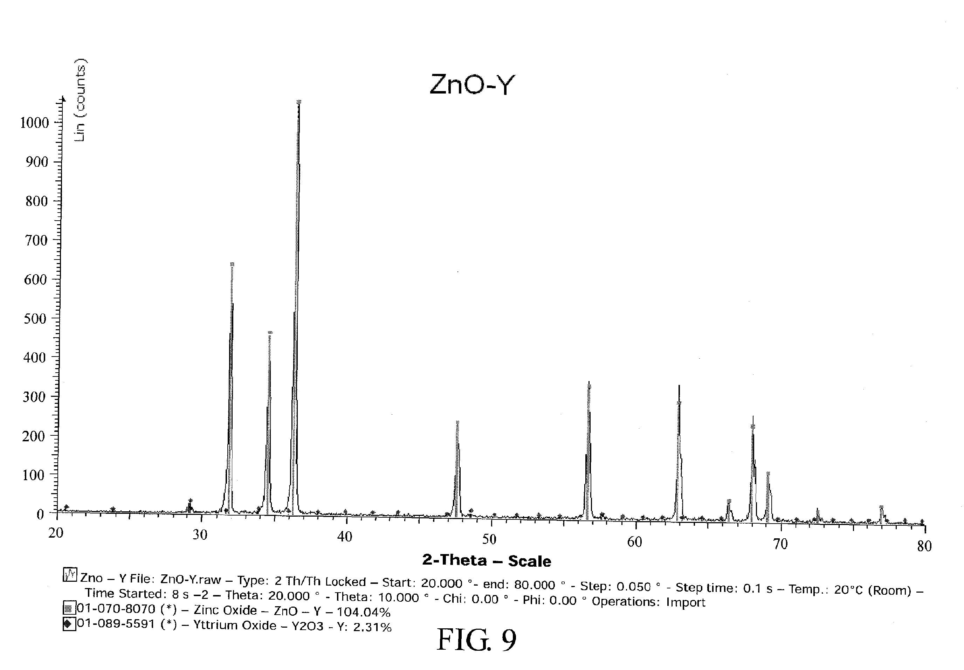

ZnO grains doped with 2mol% of Sb, Sn, In, and Y ions, respectively, may be obtained in the same manner. FIG. 6 shows the X-ray diffraction pattern of ZnO doped with 2mol% of Sb, FIG. 7 shows the X-ray diffraction pattern of ZnO doped with 2mol% of Sn, FIG. 8 shows the X-ray diffraction pattern of ZnO doped with 2mol% of In, and FIG. 9 shows the X-ray diffraction pattern of ZnO doped with 2mol% of Y, it is indicated that Sb, Sn, In or Y ions are partially dissolved into the lattices of the ZnO grains, according to comparison between the diffraction patterns of FIGS. 6 through 9 with FIG. 1 that shows the X-ray diffraction pattern of pure ZnO grains.

Thus, in the step of preparing ZnO grains doped with doping ions, the species and quantity of the doping ions can be selected from an enlarged scope. Consequently, properties of the resultant ZnO varistors, including breakdown voltage, nonlinear coefficient, C value, leakage current, surge-absorbing ability, and ESD-absorbing ability, can be effectively modulated.

### b. Preparing High-Impedance Sintering Material or Glass Powder

Raw material of a sintering material or glass powder having the composition determined by the desired properties of the resultant ZnO varistor is used. The material includes one or more selected from the group consisting of oxide, hydroxide, carbonated, and oxalate. The selected raw material after undergoing a series of processing procedures, including mixing, grinding and calcination, is turned into the sintering material. The sintering material is then ground into powder of desired fineness. Therein, the oxide is a mixture of two or more selected from the group consisting of Bi₂O₃, B₂O, Sb₂O₃, Co₂O₃, MnO₂, Cr₂O₃, V₂O₅, ZnO, NiO and SiO₂.

Alternatively, pastes prepared with different compositions are mixed, melted in high temperature, water-quenched, oven-dries, and ground into fine glass powder. Alternatively, nanotechnology is implemented to turn raw materials with different compositions into a sintering material in the form of nanosized powder or into nanosized glass powder.

In the step of preparing the sintering material or glass powder, the sintering material or glass powder with different compositions may be made to endow the ZnO varistors with thermistor properties, inductor properties, capacitor properties, etc., in addition to varistor properties.

For example, when the resultant ZnO varistor is desired to have additional thermistor properties, the sintering material or glass powder may be barium titanate oxide or nickel manganese cobalt oxide. When the resultant ZnO varistor is desired to have additional inductor properties, the sintering material or glass powder may be soft ferrite. When the resultant ZnO varistor is desired to have additional capacitor properties, the sintering material or glass powder may be titanate of high dielectric constant.

### c. Mixing ZnO Grains and High-Impedance Sintering Material

The ZnO grains of Step a) mentioned above and the high-impedance sintering material or glass powder of Step b) mentioned above are properly made according to the desired properties of the resultant ZnO varistors. Then the ZnO grains and the sintering material or glass powder are well mixed in a weight ratio the preferably ranging between 100:2 and 100:30, and more preferably ranging between 100:5 and 100:15.

### d. Processing Mixture to Produce ZnO Varistors

At last, the mixture as the product of Step c) mentioned above is processed with high-temperature calcination, grinding, binder adding, tape pressing, sintering, and silver electrode coating to produce the resultant ZnO varistors. Therein, the calcination temperature is desirably ranging between 950°C±10°C and 1100°C±10°C.

As above-mentioned illustration in Step a), if an approach to making doped ZnO grains involves immersing fine ZnO powder into a solution containing the doping ions, then the calcination temperature to produce the resultant ZnO varistors mentioned in Step d) is desirably ranging between 850°C and 940°C.

Some embodiments will be later explained for proving the process for producing zinc oxide varistors of the present invention possesses the following features:
1. The varistor properties of the resultant ZnO varistors, including breakdown voltage, nonlinear coefficient, C value, leakage current, surge-absorbing ability, and ESD-absorbing ability, can be changed or adjusted by selecting the species of the ions doping the ZnO grains or by modulating the weight ratio between the ZnO grains and the high-impedance sintering material.
2. The varistor properties of the resultant ZnO varistors can be changed or adjusted by changing the quantity of the ions doping the ZnO grains.
3. The varistor properties of the resultant ZnO varistors can be changed or adjusted by doping the ZnO grains with at least two species of doping ions or by controlling the sintering temperature.
4. The varistor properties of the resultant ZnO varistors can be changed or adjusted by modifying the composition of the sintering material or glass powder.
5. By using ZnO grains doped with appropriate doping ions and by modifying the composition of the sintering material, it is possible to have pure silver made as inner electrode and produce ZnO varistors possessing excellent varistor properties through low-temperature sintering.
6. By using sintering materials of different formulas, it is possible to produce a dual-function element having varistor properties and thermistor properties. For instance, the resultant ZnO varistor may possess varistor properties and thermistor properties at the same time, or may possess varistor properties and inductor properties at the same time, or may possess varistor properties and capacitor properties at the same time.

### Example 1:

The chemical coprecipitation method was used to prepare sample ZnO grains doped with 1mol% of different single species of ions and a sintering material numbered G1-00, which has the composition as provided below.

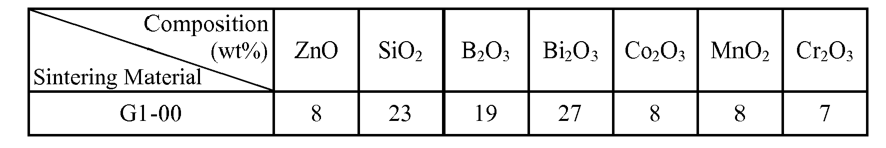

The sample ZnO grains and G1-00 sintering materials were well mixed in a weight ratio of 100:10 or 100:15 or 100:30, and then pressed into sinter cakes under 1000kg/cm². The sinter cakes were sintered at 1065°C for two hours, and got silver electrode formed thereon at 800°C. At last, the sintered product with silver electrode was made into round ZnO varistors. The varistors were tested on their varistor properties and the results are listed in Table 1.

From Table 1, it is learned that when the same sintering material is used, the varistors have their varistor properties varying with the species of the doping ions doped in the ZnO grains. For example, the breakdown voltage, abbreviated as "BDV", may range from 230 to 1729V/mm. Similarly, when the ZnO grains doped with the same doping ions, the varistors have their varistor properties varying with the mix ratio between the ZnO grains and the high-impedance sintering material.

Thus, the varistor properties of the ZnO varistor can be modified or adjusted by changing the species of the doping ions doped in ZnO grains or the mix ratio between the ZnO grains and the high-impedance sintering material.

**Table 1: Properties of ZnO Varistors Made of ZnO Grains Doped with Different Single Species of Doping Ions and the Same Sintering Material in Different Ratios**

| No. | Composition | Silver / Reduction (°C) | Green Size (mm) | Grog Size (mm) | BDV (V/mm) | α | I_{L} (µA) | Cp (pF) |
|---|---|---|---|---|---|---|---|---|
| 1 | Zn-Ce + 10% G1-00 | 7472 / 845°C | 8.4×1.08 | 7.12×0.90 | 392 | 21 | 25 | 253 |
| 2 | Zn-Ce + 15% G1-00 | 7472 / 845°C | 8.4×1.09 | 7.14×0.87 | 386 | 22 | 27 | 228 |
| 3 | Zn-Co + 10% G1-00 | 7472 / 845°C | 8.4×1.12 | 7.21×0.93 | 441 | 22 | 20 | 205 |
| 4 | Zn-Co + 15% G1-00 | 7472 / 845°C | 8.4×1.12 | 7.25×0.95 | 435 | 22 | 28 | 193 |
| 5 | Zn-Ni + 10% G1-00 | 7472 / 845°C | 8.4×1.18 | 7.17×0.98 | 451 | 20 | 29 | 208 |
| 6 | Zn-Ni + 15% G1-00 | 7472 / 845°C | 8.4×1.18 | 7.21×0.97 | 437 | 21 | 32 | 178 |
| 7 | Zn-Al + 10% G1-00 | 7472 / 845°C | 8.4×1.18 | 7.06×0.96 | 395 | 7 | 187 | 293 |
| 8 | Zn-Al + 15% G1-00 | 7472 / 845°C | 8.4×.18 | 7.10×0.97 | 348 | 8 | 157 | 283 |
| 8a | Zn-Al + 30% G1-00 | 7472 / 845°C | 8.4×.18 | 7.10×0.97 | 320 | 14 | 65 | 31 |
| 9 | Zn-Sb + 10% G1-00 | 7472 / 845°C | 8.4×1.18 | 7.01×0.93 | 809 | 29 | 7.2 | 127 |
| 10 | Zn-Sb + 15% G1-00 | 7472 / 845°C | 8.4×1.18 | 7.08×0.92 | 807 | 31 | 10 | 105 |
| 11 | Zn-Cu + 10% G1-00 | 7472 / 845°C | 8.4×1.17 | 7.13×1.03 | 447 | 11 | 84 | 270 |
| 12 | Zn-Cu + 15% G1-00 | 7472 / 845°C | 8.4×1.17 | 7.17×0.96 | 470 | 13 | 72 | 238 |
| 13 | Zn-Pr + 10% G1-00 | 7472 / 845°C | 8.4×1.19 | 7.03×0.95 | 356 | 20 | 24 | 259 |
| 14 | Zn-Pr + 15% G1-00 | 7472 / 845°C | 8.4×1.19 | 7.09×0.98 | 311 | 23 | 19 | 237 |
| 15 | Zn-Se + 10% 01-00 | 7472 / 845°C | 8.4×1.12 | 7.17×0.93 | 399 | 20 | 34 | 284 |
| 16 | Zn-Se + 15% G1-00 | 7472 / 845°C | 8.4×1.12 | 7.19×0.92 | 372 | 21 | 33 | 243 |
| 17 | Zn-Fe + 10% G1-00 | 7472 / 845°C | 8.4×1.14 | 7.22×0.94 | 230 | 10 | 87 | 557 |
| 18 | Zn-Fe + 15% G1-00 | 7472 / 845°C | 8.4×1.14 | 7.18×0.91 | 251 | 13 | 55 | 386 |
| 19 | Zn-Cr + 10% G1-00 | 7472 / 845°C | 8.4×1.08 | 7.22×0.88 | 566 | 20 | 28 | 185 |
| 20 | Zn-Cr + 15% G1-00 | 7472 / 845°C | 8.4×1.08 | 7.21×0.90 | 526 | 22 | 28 | 152 |
| 21 | Zn-Nb + 10% G1-00 | 7472 / 845°C | 8.4×1.10 | 7.14×0.89 | 392 | 12 | 77 | 319 |
| 22 | Zn-Nb + 15% G1-00 | 7472 / 845°C | 8.4×1.10 | 7.17×0.92 | 399 | 15 | 60 | 265 |
| 23 | Zn-V + 10% G1-00 | 7472 / 845°C | 8.4×1.07 | 7.59×0.91 | 445 | 17 | 46 | 236 |
| 24 | Zn-V + 15% G1-00 | 7472 / 845°C | 8.4×1.07 | 7.53×0.90 | 417 | 18 | 45 | 215 |
| 25 | Zn-La + 10% G1-00 | 7472 / 845°C | 8.4×1.13 | 7.09×0.94 | 431 | 14 | 46 | 230 |
| 26 | Zn-La + 15% G1-00 | 7472 / 845°C | 8.4×.13 | 7.11×0.95 | 424 | 15 | 46 | 213 |
| 27 | Zn-Ti + 10% G1-00 | 7472 / 845°C | 8.4×1.16 | 7.06×0.98 | 424 | 10 | 100 | 239 |
| 28 | Zn-Ti + 15% G1-00 | 7472 / 845°C | 8.4×1.16 | 7.10×0.96 | 421 | 14 | 64 | 200 |
| 29 | Zn-Sn + 10% G1-00 | 7472 / 845°C | 8.4×1.19 | 6.96×0.99 | 775 | 28 | 6.6 | 99 |
| 30 | Zn-Sn + 15% G1-00 | 7472 / 845°C | 8.4×1.19 | 7.02×0.93 | 773 | 27 | 11 | 98 |
| 30a | Zn-Sn + 30% G1-00 | 7472 / 845°C | 8.4×1.19 | 7.02×0.93 | 758 | 25 | 14 | 103 |
| 31 | Zn-Li + 10% G1-00 | 7472 / 845°C | 8.4×1.15 | 7.21×0.94 | 434 | 18 | 38 | 237 |
| 32 | Zn-Li + 15% G1-00 | 7472 / 845°C | 8.4×1.15 | 7.22×.90 | 414 | 20 | 33 | 196 |
| 33 | Zn-Ag-W + 10% G1-00 | 7472 / 845°C | 8.4×1.11 | 7.40×.92 | 380 | 17 | 41 | 280 |
| 34 | Zn-Ag-W + 15% G1-00 | 7472 / 845°C | 8.4×1.11 | 7.38×0.92 | 354 | 17 | 42 | 234 |
| 35 | Zn-Zr + 10% G1-00 | 7472 / 845°C | 8.4×1.17 | 7.09×.97 | 457 | 13 | 68 | 237 |
| 36 | Zn-Zr + 15% G1-00 | 7472 / 845°C | 8.4×1.17 | 7.13×0.94 | 440 | 15 | 59 | 205 |
| 37 | Zn-W + 10% G1-00 | 7472 / 845°C | 8.4×1.07 | 7.28×0.91 | 465 | 14 | 60 | 277 |
| 38 | Zn-W + 15% G1-00 | 7472 / 845°C | 8.4×1.07 | 7.28×0.91 | 445 | 15 | 55 | 210 |
| 39 | Zn-Si + 10% G1-00 | 7472 / 845°C | 8.4×1.17 | 7.11×0.95 | 282 | 22 | 16 | 316 |
| 40 | Zn-Si + 15% G1-00 | 7472 / 845°C | 8.4×1.17 | 7.14×0.93 | 272 | 22 | 14 | 248 |
| 41 | Zn-In + 10% G1-00 | 7472 / 845°C | 8.4×1.23 | 6.85×0.97 | 1729 | 10 | 54 | 36 |
| 42 | Zn-In + 15% G1-00 | 7472 / 845°C | 8.4×1.23 | 6.91×1.00 | 1409 | 9 | 100 | 43 |
| 43 | Zn-Ag + 10% G1-00 | 7472 / 845°C | 8.4×1.13 | 7.22×.94 | 386 | 21 | 28 | 276 |
| 44 | Zn-Ag + 15% G1-00 | 7472 / 845°C | 8.4×1.13 | 7.25×0.94 | 356 | 22 | 28 | 237 |

### Example 2:

The chemical coprecipitation method was used to prepare sample ZnO grains doped with different quantity of the same single species of doping ions. The sintering material G1-00 of Example 1 was also used.

The sample ZnO grains and the sintering material G1-00 were well mixed in a weight ratio of 100:10 and then the mixture was used to make round ZnO varistors under the same conditions as provided in Example 1. The varistors were tested on their varistor properties and the results are listed in Table 2.

From Table 2, it is learned that when the ZnO grains is doped with the same doping ions and then mixed with the same sintering material, the varistors have their varistor properties varying with the quantitative variation of the doping ions doped in ZnO grains.

Thus, the varistor properties of the ZnO varistor can be adjusted by controlling the quantity of the doping ions doped in ZnO grains.

**Table 2: Properties of ZnO Varistors Made of ZnO Grains Doped with the Same Single Species of Doping Ions in Different Quantity and the Same Sintering Material**

| No. | Composition | Sinter Temp. (°C) | Silver / Reduction (°C) | Green Size (mm) | Grog Size (mm) | BDV (V/mm) | α | I_{L} (µA) | Cp (pF) | Clamp |
|---|---|---|---|---|---|---|---|---|---|---|
| 45 | Zn-0.5%Ni + 10% G1-00 | 1065 | 7472 / 845°C | 8.4×1.13 | 7.07×0.90 | 298 | 24 | 8.2 | 325 | 1.81 |
| 46 | Zn-1.0%Ni + 10% G1-00 | 1065 | 7472 / 845°C | 8.4×1.15 | 6.99×0.93 | 291 | 24 | 9.2 | 304 | 1.92 |
| 47 | Zn-1.5%Ni + 10% G1-00 | 1065 | 7472 / 845°C | 8.4×1.14 | 7.03×0.91 | 326 | 24 | 9.7 | 304 | 1.84 |
| 48 | Zn-0.5 % Sn + 10% G1-00 | 1065 | 7472 / 845°C | 8.4×1.27 | 6.72×0.89 | 683 | 31 | 3.6 | 145 | 1.66 |
| 49 | Zn-1.0%Sn + 10% G1-00 | 1065 | 7472 / 845°C | 8.4×1.27 | 6.67×1.02 | 669 | 30 | 10 | 125 | 1.70 |
| 50 | Zn-1.5%Sn + 10% G1-00 | 1065 | 7472 / 845°C | 8.4×1.26 | 6.75×0.98 | 661 | 33 | 4 | 111 | 1.65 |
| 51 | Zn-0.5 %Li + 10% G1-00 | 1065 | 7472 / 845°C | 8.4×1.14 | 7.02×0.92 | 258 | 24 | 7.7 | 292 | 1.83 |
| 52 | Zn-1.0%Li + 10% G1-00 | 1065 | 7472 / 845°C | 8.4×1.14 | 7.00×0.93 | 251 | 24 | 6.8 | 255 | 1.87 |
| 53 | Zn-1.5%Li + 10% G1-00 | 1065 | 7472 / 845°C | 8.4×1.14 | 7.03×0.93 | 265 | 24 | 6.6 | 273 | 1.87 |
| 54 | Zn-0.5%Sb + 10% G1-00 | 1065 | 7472 / 845°C | 8.4×.17 | 6.91×0.95 | 575 | 29 | 3.7 | 130 | 1.70 |
| 55 | Zn-1.0%Sb + 10% G1-00 | 1065 | 7472 / 845°C | 8.4×1.17 | 6.76×0.97 | 659 | 31 | 3.3 | 97 | 1.62 |
| 56 | Zn-1.5%Sb + 10% G1-00 | 1065 | 7472 / 845°C | 8.4×1.20 | 6.81×0.96 | 596 | 32 | 2.6 | 94 | 1.57 |
| 57 | Zn-0.5 %Pr + 10% G1-00 | 1065 | 7472 / 845°C | 8.4×.26 | 6.75×1.0.1 | 310 | 24 | 6 | 243 | 1.86 |
| 58 | Zn-1.0%Pr + 10% G1-00 | 1065 | 7472 / 845°C | 8.4×.20 | 6.91×0.95 | 356 | 25 | 6.8 | 249 | 1.81 |
| 59 | Zn-1.5%Pr + 10% G1-00 | 1065 | 7472 / 845°C | 8.4×1.21 | 6.84×0.98 | 337 | 25 | 6.8 | 233 | 1.80 |
| 60 | Zn-0.5 %Ag + 10% G1-00 | 1065 | 7472 / 845°C | 8.4×1.14 | 7.01×0.96 | 275 | 24 | 6.9 | 259 | 1.83 |
| 61 | Zn-1.0%Ag + 10% G1-00 | 1065 | 7472 / 845°C | 8.4×1.19 | 6.97×0.98 | 265 | 25 | 8.9 | 258 | 1.77 |
| 62 | Zn-1.5%Ag + 10% G1-00 | 1065 | 7472 / 845°C | 8.4×1.18 | 6.99×0.97 | 239 | 24 | 9.1 | 305 | 1.76 |
| 63 | Zn-0.5%Si + 10% G1-00 | 1065 | 7472 / 845°C | 8.4×1.16 | 7.02×0.93 | 277 | 24 | 10 | 305 | 1.78 |
| 64 | Zn-1.0%Si + 10% G1-00 | 1065 | 7472 / 845°C | 8.4×.114 | 7.13×0.92 | 312 | 24 | 13 | 277 | 1.73 |
| 65 | Zn-1.5%Si + 10% G1-00 | 1065 | 7472 / 845°C | 8.4×1.19 | 6.92×0.94 | 238 | 24 | 11 | 358 | 1.86 |
| 66 | Zn-0.5%V + 10% G1-00 | 1065 | 7472 / 845°C | 8.4×1.12 | 7.09×0.92 | 266 | 26 | 10 | 290 | 1.63 |
| 67 | Zn-1.0%V + 10% G1-00 | 1065 | 7472 / 845°C | 8.4×1.04 | 7.41×0.90 | 247 | 24 | 10 | 286 | 1.90 |
| 68 | Zn-1.5%V + 10% G1-00 | 1065 | 7472 / 845°C | 8.4×1.06 | 7.40×0.91 | 270 | 23 | 10 | 263 | 1.86 |

### Example 3:

The chemical coprecipitation method was used to prepare sample ZnO grains doped with at least two species of doping ions as shown in Table 3. The sintering material G1-00 of Example 1 was also used.

The sample ZnO grains and the sintering material G1-00 were well mixed in a weight ratio of 100:10 and then the mixture was used to make ZnO varistors under the same conditions as provided in Example 1. The varistors were tested on their varistor properties and the results are listed in Table 3.

From Table 3, it is learned that when the sample ZnO grains doped with at least two species of doping ions and mixed with the same sintering material, the varistors have their varistor properties varying with the species of the doping ions doped in the ZnO grains. Meantime, the varistors also have their varistor properties varying with variation of the sintering temperature.

Thus, the varistor properties of the ZnO varistor can be adjusted in an enlarged range by changing the species of the doping ions doped in the ZnO grains or by controlling the sintering temperature.

**Table 3: Varistor Properties of ZnO Varistors Made of ZnO Grains Doped with at least Two Species of Single Doping Ions and the Same Sintering Material**

| No. | Composition | Sinter Temp. (°C) | Silver/ Reduction (°C) | Green Size (mm) | Grog Size (mm) | BDV (V/mm) | α | I_{L} (µA) | Cp (pF) | Clamp | Surge (A) | ESD (KV) |
|---|---|---|---|---|---|---|---|---|---|---|---|---|
| 69 | Zn-1%Si-0.5%Pr + 10%G1-00 | 1065 | 7472 / 845 | 8.4×1.20 | 6.80×0.93 | 261 | 26 | 3.2 | 348 | 1.69 | 164 | 30 |
| 70 | Zn-1%Si-0.5%Pr + 10%G1-00 | 1107 | 7472 / 845 | 8.4×1.20 | 6.78×0.96 | 204 | 22 | 2.3 | 426 | 1.88 | 160 | 20 |
| 71 | Zn-1%Si-0.5%Sn-0.5%Sb + 10%G1-00 | 1065 | 7472 / 845 | 8.4×1.23 | 6.70×0.97 | 691 | 29 | 1.9 | 99 | 1.33 | 150 | 30 |
| 72 | Zn-1%Si-0.5%Sn-0.5%Sb + 10%G1-00 | 1107 | 7472 / 845 | 8.4×1.23 | 6.69×0.96 | 580 | 35 | 2.7 | 150 | 1.49 | 200 | 20 |
| 72a | Zn-1%Si-13.5%Sn-1.5%Sb + 10%G1-00 | 1065 | 7472 / 845 | 8.4×1.23 | 6.82×1.03 | 1354 | 39 | 23 | 78 | 1.43 | 180 | 30 |
| 72b | Zn-1%Si-13.5%Sn-1.5%Sb + 10%G1-00 | 1107 | 7472 / 845 | 8.4×1.23 | 6.75×1.00 | 1138 | 37 | 207 | 132 | 1.52 | 220 | 30 |
| 73 | Zn-1%Si-0.5%Pr-0.5%Li + 10%G1-00 | 1065 | 7472 / 845 | 8.4×1.23 | 6.8×0.98 | 234 | 25 | 8.7 | 382 | 1.75 | 150 | 30 |
| 74 | Zn-1%Si-0.5%Pr-0.5%Li + 10%G1-00 | 1107 | 7472 / 845 | 8.4×1.20 | 6.76×0.97 | 206 | 25 | 3.4 | 441 | 1.80 | 100 | 30 |
| 75 | Zn-1%Si-0.5%Pr +10%G1-00 | 1065 | 7472 / 845 | 8.4×1.23 | 6.80×0.98 | 242 | 26 | 4.6 | 374 | 1.80 | 164 | 30 |
| 76 | Zn-1%Si-0.5%Pr + 10%G1-00 | 1107 | 7472 / 845 | 8.4×1.23 | 6.77×1.03 | 218 | 24 | 10 | 400 | 1.75 | 160 | 20 |
| 77 | Zn-1%Si-0.5%Sn-0.5%Sb + 10%G1-00 | 1065 | 7472 / 845 | 8.4×1.31 | 6.72×0.98 | 583 | 34 | 8.1 | 135 | 1.48 | 150 | 30 |
| 78 | Zn-1%Si-0.5%Sn-0.5%Sb + 10%G1-00 | 1107 | 7472 / 845 | 8.4×1.31 | 6.70×0.92 | 602 | 32 | 14 | 122 | 1.53 | 200 | 20 |

### Example 4:

The chemical coprecipitation method was used to prepare sample ZnO grains coded Zn-X29 and Zn-X36, as shown in Table 4. The compositions of Zn-X29 and Zn-X36 are given below:

| | | | | | | | | | |
|---|---|---|---|---|---|---|---|---|---|
| Zn-X29 ZnO Grain | | | | | | | | | |
| | | | | | | | | | |
| Composition | ZnO | V | Mn | Cr | Co | Si | B | Pr | Ag |
| mol% | 93 | 2 | 0.5 | 1 | 1 | 1.5 | 0.4 | 0.3 | 0.5 |
| | | | | | | | | | |
| Zn-X36 ZnO Grain | | | | | | | | | |
| | | | | | | | | | |
| Composition | ZnO | V | Mn | Cr | Co | Si | B | Pr | Ag |
| mol% | 100 | 2 | 0.5 | 0.5 | 0.5 | -- | -- | -- | -- |

The chemical coprecipitation method was used to prepare sintering materials numbered G1-00, G1-01, and G1-02, as shown in Table 4. Compositions of the sintering materials G1-00, G1-01, and G1-02 are given below:

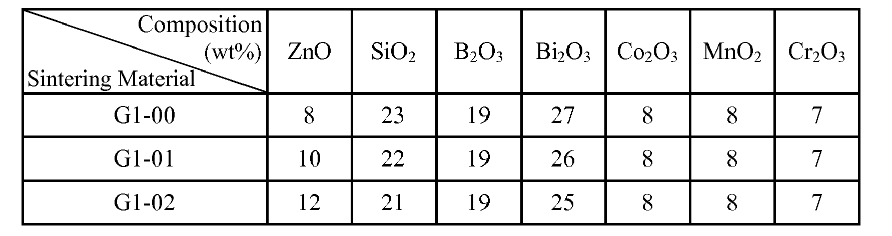

The sample ZnO grains and sintering materials were well mixed in a weight ratio of 100:10 and then the mixture were used to make ZnO varistors under the same conditions as provided in Example 1. The varistors were tested on their varistor properties and the results are listed in Table 4.

From Table 4, it is learned that sintering materials significantly affect the varistor properties of the ZnO varistors. For example, different sintering materials lead to very different levels of surge-absorbing ability of the ZnO varistors.

Thus, the varistor properties of the ZnO varistor can be adjusted in an enlarged range by changing the sintering material mixed with the ZnO grains.

**Table 4: Varistor Properties of ZnO Varistors Made of ZnO Grains Doped with the Same Species of Doping Ions and Different Sintering Materials**

| No. | Composition | Sinter Temp. (°C) | Silver/ Reduction (°C) | Green Size (mm) | Grog Size (mm) | BDV (V/mm) | α | I_{L} (µA) | Cp (pF) | Clamp | Surge (A) | ESD (KV) |
|---|---|---|---|---|---|---|---|---|---|---|---|---|
| 79 | Zn-X29 +10%G1-00 | 1065 | 7472 / 845 | 8.4×1.47 | 6.55×1.03 | 390 | 21 | 9 | 124 | 1.77 | 80 | 30 |
| 80 | Zn-X29 +10%G1-01 | 1065 | 7472 / 845 | 8.4×1.24 | 6.48×0.94 | 414 | 27 | 4.6 | 185 | 1.77 | 220 | 30 |
| 81 | Zn-X29 +10%G1-02 | 1065 | 7472 / 845 | 8.4×1.22 | 6.58×0.91 | 357 | 26 | 7 | 220 | 1.70 | 300 | 30 |
| 82 | Zn-X36 +10%G1-00 | 1065 | 7472 / 845 | 8.4×1.37 | 6.76×1.01 | 311 | 17 | 42 | 263 | 1.60 | 350 | 30 |
| 83 | Zn-X36 +10%G1-01 | 1065 | 7472 / 845 | 8.4×1.20 | 6.73×0.93 | 331 | 22 | 15 | 297 | 1.81 | 120 | 30 |
| 84 | Zn-X36 +10%G1-02 | 1065 | 7472 / 845 | 8.4×1.18 | 6.82×0.89 | 348 | 20 | 27 | 297 | 1.82 | 300 | 30 |

### Example 5:

The chemical coprecipitation method was used to prepare sample ZnO grains coded Zn-X41, Zn-X72, and Zn-X73, as shown in Table 5. Compositions of Zn-X41, Zn-X72, and Zn-X73 are given below:

| | | | | | | | | |
|---|---|---|---|---|---|---|---|---|
| Zn-X41 ZnO Grain | | | | | | | | |
| | | | | | | | | |
| Composition | ZnO | Mn | Cr | Co | Si | Sb | Pr | Ag |
| mol% | 92.3 | 1.5 | 0.5 | 1.0 | 1.0 | 2.0 | 0.2 | 1.5 |
| | | | | | | | | |
| Zn-X72 ZnO Grain | | | | | | | | |
| | | | | | | | | |
| Composition | ZnO | Mn | Cr | Co | Si | Sb | Bi | Ag |
| mol% | 93.0 | 1.0 | 1.0 | 2.0 | -- | 2.0 | 1.0 | -- |
| | | | | | | | | |
| Zn-X73 ZnO Grain | | | | | | | | |
| | | | | | | | | |
| Composition | ZnO | Mn | Cr | Co | Si | Sb | Bi | Ag |
| mol% | 92.3 | 0.5 | 1.0 | 1.0 | 1.5 | 2.0 | 1.5 | -- |

The chemical coprecipitation method was used to prepare sintering materials numbered G1-08 and G1-11, as shown in Table 5. The compositions of sintering materials G1-08 and G1-11 are given below:

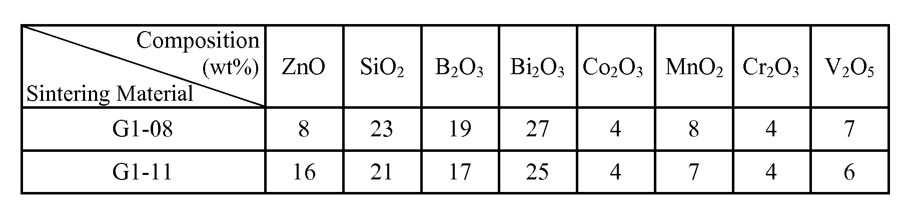

The sample ZnO grains and the sintering materials were well mixed in a weight ratio of 100:10 and then the mixtures were used to make ZnO varistors under the same conditions as provided in Example 1, except that the sintering temperature is changed to 950°C. The varistors were tested on their varistor properties and the results are listed in Table 5.

From Table 5, it is learned that the ZnO varistors can be made with excellent varistor properties under low sintering temperature by using ZnO grains doped with proper species of doping ions and modifying the compositions of the sintering material.

**Table 5: Varistor Properties of ZnO Varistors Made of ZnO Grains Doped with Doping Ions and Sintering Materials**

| No. | Composition | Sinter Temp. (°C) | Silver/ Reduction (°C) | Green Size (mm) | Grog Size (mm) | BDV (V/mm) | α | I_{L} (µA) | Cp (pF) | Clamp | Surge (A) | ESD (KV) |
|---|---|---|---|---|---|---|---|---|---|---|---|---|
| 85 | Zn-X41 +10%G1-08 | 950 | 7472 / 845 | 8.4×1.20 | 6.50×0.89 | 1317 | 48 | 1.1 | 29 | 1.40 | 206 | 30 |
| 86 | Zn-X41 +10%G1-11 | 950 | 7472 / 845 | 8.4×1.38 | 6.07×0.94 | 1079 | 40 | 1.1 | 39 | 1.59 | 160 | 30 |
| 87 | Zn-X72 +10%G1-08 | 950 | 7472 / 845 | 8.4×1.12 | 6.93×0.92 | 937 | 47 | 1.5 | 54 | 1.44 | 280 | 30 |
| 88 | Zn-X73 +10%G1-08 | 950 | 7472 / 845 | 8.4×1.10 | 7.00×0.87 | 1063 | 42 | 0.7 | 42 | 1.58 | 400 | 30 |

### Example 6:

The chemical coprecipitation method was used to prepare sample ZnO grains coded Zn-X144, doped with 2mol% of Si. The sintering material G1-08 as described in Example 5 was also prepared by means of the chemical coprecipitation method.

The sample ZnO grains and the sintering material G1-08 were well mixed in a weight ratio of 100:5 and then the mixture was used to make ZnO varistors under the same conditions as provided in Example 1, except that the sintering temperature is changed to 1,000°C. The varistors were tested on their varistor properties and the results are listed in Table 6.

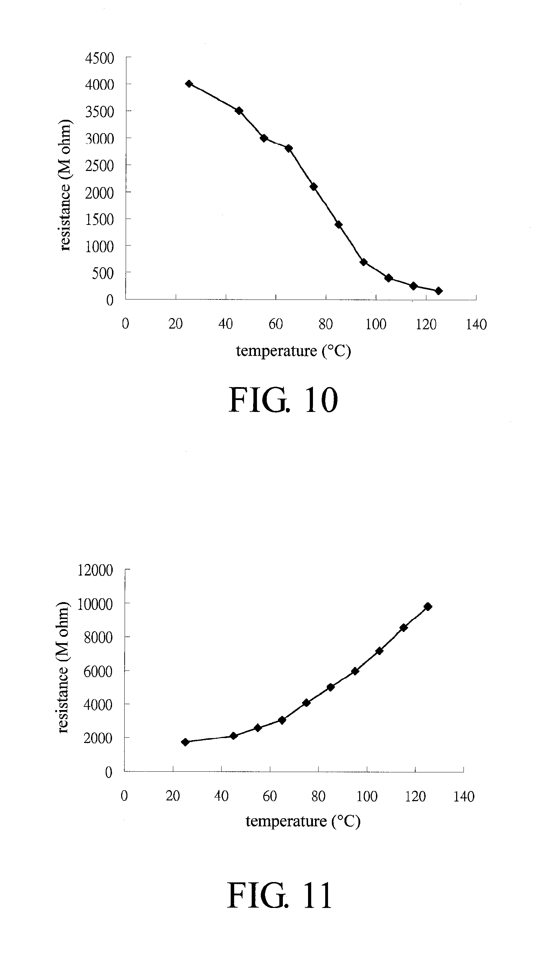

The varistors were also tested on their thermistor properties and the results are listed in Tables 7 and FIG. 10.

From Tables 6 and 7, it is learned that the ZnO varistors can be made with varistor properties and thermistor properties by using ZnO grains doped with proper species of doping ions and by modifying composition of the sintering material. In addition, from the statistics of FIG. 10, the resultant ZnO varistors have NTC (Negative Temperature Coefficient) thermistor properties.

**Table 6: Varistor Properties of ZnO Varistors Made of ZnO Grains Doped with Si and G1-08 Sintering Material**

| No. | Composition | Sinter Temp. (°C) | Silver/ Reduction (°C) | Green Size (mm) | Grog Size (mm) | BDV (V/mm) | α | I_{L} (µA) | Cp (pF) | Surge (A) | ESD (KV) |
|---|---|---|---|---|---|---|---|---|---|---|---|
| 89 | Zn-X144 +5%G1-08 | 1000 | 7472 / 845 | 8.41×1.11 | 6.88×0.87 | 736 | 23 | 7.4 | 144 | 100 | 30 |

**Table 7: NTC Properties of ZnO Varistors Made of ZnO Grains Doped with Si and G1-08 Sintering Material**

| | 25°C | 35°C | 45°C | 55°C | 65°C | 75°C | 85°C | B Value |
|---|---|---|---|---|---|---|---|---|
| Resistance (M ohm) | 4000 | 3800 | 3500 | 3000 | 2800 | 2100 | 1400 | 1867 |

### Example 7:

The chemical coprecipitation method was used to prepare sample ZnO grains coded Zn-X141, doped with 2mol% of Ag. A sintering material coded G1-38 whose composition is given below was also prepared by means of the chemical coprecipitation method.

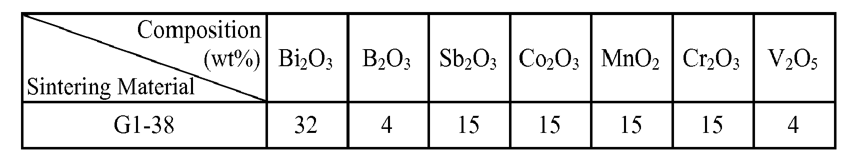

The sample ZnO grains and the sintering material G1-38 were well mixed in a weight ratio of 100:10 and then the mixture was used to make ZnO varistors under the same conditions as provided in Example 1. The varistor was tested on its varistor properties and the results are listed in Table 8.

The varistors were also tested on its thermistor properties and the results are listed in Table 9 and FIG. 11.

From Tables 8 and 9, it is learned that the ZnO varistors can be made with varistor properties and thermistor properties by using ZnO grains doped with proper species of doping ions and modifying composition of the sintering material. In addition, from the statistics of FIG. 11, the resultant ZnO varistor possesses PTC (Positive Temperature Coefficient) thermistor properties.

**Table 8. Varistor Properties of ZnO Varistors Made of ZnO Grains Doped with Ag and G1-38 Sintering Material**

| No. | Composition | Sinter Temp. (°C) | Silver/ Reduction (°C) | Green Size (mm) | Grog Size (mm) | BDV (V/mm) | α | I_{L} (µA) | Cp (pF) | Surge (A) | ESD (KV) |
|---|---|---|---|---|---|---|---|---|---|---|---|
| 90 | Zn-X141 +5%G1-38 | 1060 | 7472 / 845 | 8.41×1.0 | 7.55×0.83 | 846 | 9 | 48 | 156 | 630 | 20 |

**Table 9: PTC Properties of ZnO Varistors made of ZnO Grains Doped with Ag and G1-38 Sintering Material**

| | 25°C | 35°C | 45°C | 55°C | 65°C | 75°C | 85°C | B Value |
|---|---|---|---|---|---|---|---|---|
| Resistance (M ohm) | 1700 | 2100 | 2600 | 3050 | 4100 | 5000 | 5000 | -1918 |

### Example 8

ZnO grains of two formulas, A and B, which were doped with different doping ions and mixed with different sintering materials were used. Therein, Formula A contains Zn-X144 ZnO grains of Example 6 mixed with 5% of G1-08 sintering material. After sintering, Formula A gave strong varistor properties and considerable NTC properties (yet has high resistance at 25°C).

Formula B contains Zn-X144 ZnO grains of Example 6 mixed with 30% of N-08 sintering material by weight. After sintering, Formula B gave meaningful NTC properties (yet has high resistance at 25°C) but had inferior varistor properties. Therein, N-08 has the below composition.

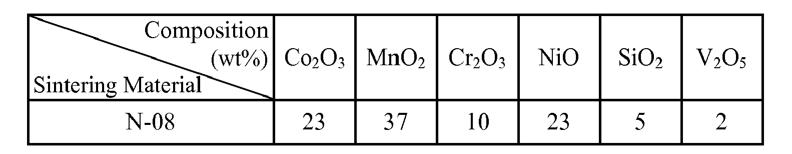

Formula A and Formula B were respectively added with a binder and a solvent, and then were ball ground and pulped so as to be made into green tapes having a thickness of 20-60µm through a tape casting process.

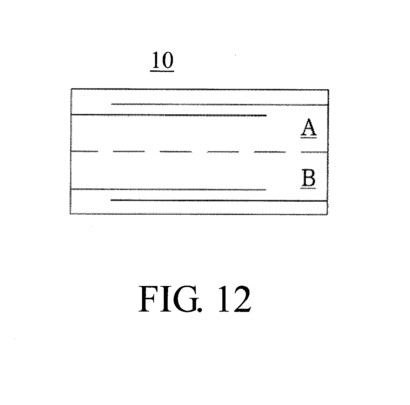

According to the know approach to making multi-layer varistors, the green tapes of Formula A and Formula B were piled up and printed with inner electrode, to form green tape 10 for the dual-function chip as shown in FIG. 12. After binder removal, the green tape 10 was placed into a sintering furnace to be heated at 900-1050°C for 2 hours.

Then two ends of the green tape 10 were coated with silver electrode and sintered at 700-800°C for 10 minutes to form the dual-function chip element. Measurement of electricity of the dual-function chip element indicates that the chip element possesses varistor properties and excellent NTC thermistor properties (with low resistance at room temperature).

Then electrical properties of the chip element, including ESD tolerance and thermistor properties, were also tested and are provided in Tables 10 and 11.

From Tables 10 and 11, it is learned that the chip element is capable of enduring 20 times of ESD 8KV applied thereto and has 10.2K ohm of NTC thermistor properties while presenting low resistance at room temperature. Thus, the chip element is a dual-function element possessing both varistor properties and thermistor properties.

**Table 10. Varistor Properties of Dual-Function Element Made of Two Formulas containing ZnO grains doped with different Species of Doping Ions and Different Sintering Materials**

| No. | Composition | Sinter Temp. (°C) | Reduction (°C) | Green Size (mm) | Grog Size (mm) | BDV (V/mm) | Cp (pF) | ESD (KV) |
|---|---|---|---|---|---|---|---|---|
| 91 | Zn-X141 +5%G1-38 Zn-X144 +30%N-08 | 1000 | 845 | 1.95×0.97 | 1.6×0.795 | 14 | 376 | pass |

**Table 11. NTC Properties of Dual-Function Element Made of Two Formulas containing ZnO Grains Doped with Different Species of Doping Ions and Different Sintering Materials**

| | 25°C | 35°C | 45°C | 55°C | 65°C | 75°C | 85°C | B Value |
|---|---|---|---|---|---|---|---|---|
| Resistance (K ohm) | 10.2 | 8.6 | 7.5 | 5.4 | 4.2 | 3.3 | 2.7 | 2367 |

### Example 9

Zn-X300 ZnO grains of Table 12 were made by immersing ZnO powder of 0.6 micron into a solution containing doping ions, and drying and sintering the doped ZnO powder at 1050°C for 5 hours, and grinding the sintered product into fine grains. Zn-X300 ZnO grains have the composition shown below:

| | | | | |
|---|---|---|---|---|
| Zn-X300 ZnO Grain | | | | |
| | | | | |
| Composition | Zn | Sn | Si | Al |
| mol% | 0.97 | 0.01 | 0.02 | 0.000075 |

The chemical coprecipitation method was used to prepare a sintering material numbered G-200, as shown in Table 12. The composition of the sintering material G-200 is given below:

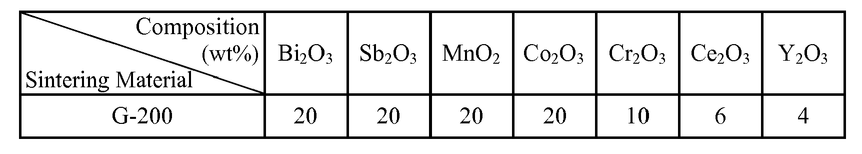

The sample ZnO grains and the sintering material were well mixed in a weight ratio of 100:17.6 and then ground. The ground product was used to make ZnO varistors under the same conditions as provided in Example 1, except that the sintering temperature was changed to 980°C and 1020°C. The resultant ZnO varistors were tested on their varistor properties and the results are listed in Table 12.

**Table 12. Varistor Properties of Multi-Layer Varistor Made of Zn-X300 Grains and G-200 Sintering Material**

| No. | Composition | Sinter Temp. (°C) | Green Size (mm) | Grog Size (mm) | BDV (V/mm) | α | I_{L} (µA) | Cp (pF) | Clamp | Surge (A) | ESD (KV) |
|---|---|---|---|---|---|---|---|---|---|---|---|
| 92 | Zn-X300 +17.6%G-200 | 1020 | 8.4×1.20 | 6.78×0.94 | 530 | 29 | 15 | 261 | 1.42 | 264 | 30 |
| 93 | Zn-X300 +17.6%G-200 | 980 | 8.4×1.20 | 6.79×0.96 | 660 | 28 | 16 | 193 | 1.38 | 398 | 30 |

### Example 10

Zn-X301 ZnO grains of Table 13 was made by immersing ZnO powder of 0.6 micron into a solution containing doping ions, and drying and calcining the doped ZnO powder at the sintering temperature of 850°C for 30 minutes in air or in argon gas, and grinding the sintered product into fine grains. Zn-X301 ZnO grains have the composition as below:

| | | | | |
|---|---|---|---|---|
| Zn-X301 ZnO Grain | | | | |
| | | | | |
| Composition | Zn | Sn | Si | Al |
| mol% | 0.983 | 0.006 | 0.001 | 0.0003 |

The chemical coprecipitation method was used to prepare a sintering material numbered G-201, as shown in Table 13.

The composition of G-201 sintering material is given below:

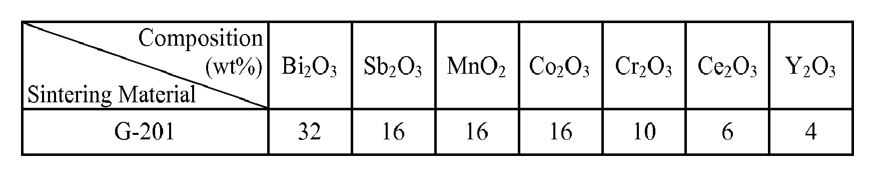

The sample ZnO grains and the sintering material were well mixed in a weight ratio of 100:15 and then ground. Then, the conventional technology for making multi-layer varistors was implemented while pure silver was taken as the material for inner electrode and inner electrode printing was conducted for two or four times. The product was sintered at low temperature, e.g., sintering temperature of 850°C or 940°C, to form multi-layer varistors having 0603 specifications. Varistor properties of the multi-layer varistors made by two and four times of inner electrode printing were both measured and the results are given in Table 13.

From Table 13, it is learned that the varistor made by two times of inner electrode printing has a 30A tolerance to surge of 8/20µs, while the varistor made by four times of inner electrode printing has a tolerance up to 40A against the same surge. Thus, the ZnO varistors can be made with excellent varistor properties under low sintering temperature by controlling the number of times where inner electrode printing is conducted.

**Table 13: Properties of Multi-Layer Varistor Made by Sintering Zn-X301+15%G-201 at Low Temperature (Sintering Temperature at 850°C or 940°C)**

| No. | Composition | Ag Coating Times | Sinter Temp. (°C) | Green Size (mm) | Grog Size (mm) | BDV (V/mm) | α | I_{L} (µA) | Cp (pF) | Clamp | Surge (A) | ESD (KV) |
|---|---|---|---|---|---|---|---|---|---|---|---|---|
| 94 | Zn-X301 +15%G-201 | 2 | 850 | 1.95×0.97 | 1.6×0.8 | 35.5 | 33 | 0.5 | 34 | 1.38 | **30** | 8 |
| 95 | Zn-X301 +15%G-201 | 4 | 850 | 1.95×0.97 | 1.6×0.8 | 32.3 | 35 | 1.1 | 98 | 1.33 | **40** | 8 |
| 96 | Zn-X301 +15%G-201 | 2 | 940 | 1.95×0.97 | 1.56×0.77 | 28.8 | 30 | 0.7 | 40 | 1.46 | **30** | 8 |
| 97 | Zn-X301 +15%G-201 | 4 | 940 | 1.95×0.97 | 1.56×0.77 | 26.5 | 31 | 1.4 | 113 | 1.35 | **40** | 8 |

## Claims

1. Process for producing a zinc oxide (ZnO) varistor, comprising the following steps:
a) preparing ZnO grains doped with one or more species of doping ions, wherein species of doping ions is selected from the group consisting of Ag, Li, Cu, Al, Ce, Co, Cr, In, Ga, La, Y, Nb, Ni, Pr, Sb, Se, Ti, V, W, Zr, Si, B, Fe, and Sn, and wherein the doping quantity of the doping ions is less than 15mol% of ZnO;
b) preparing a high-impedance sintering material or glass powder, which is made by sintering a raw material and grinding the sintered raw material into fine powder, wherein the raw material is oxide, hydroxide, carbonated, oxalate, barium titanate oxide, nickel manganese cobalt oxide, soft ferrite, titanate or any combination thereof;
c) well mixing the ZnO grains prepared at Step a) and the high-impedance sintering material or the glass powder prepared at Step b) in a weight ratio ranging between 100:2 and 100:30 into a mixture; and
d) processing the mixture of Step c) with high-temperature calcination, grinding, binder adding, tape pressing, sintering, and silver electrode coating to produce the ZnO varistor.

2. Process for producing a zinc oxide (ZnO) varistor as defined in Claim 1, **characterized in that** the doping quantity of the doping ions of Step a) is less then 10mol% of ZnO.

3. Process for producing a zinc oxide (ZnO) varistor as defined in Claim 1, **characterized in that** the doping quantity of the doping ions of Step a) is less then 2mol% of ZnO.

4. Process for producing a zinc oxide (ZnO) varistor as defined in one of Claims 1 to 3, **characterized in that** the weight ratio between the ZnO grains and the high-impedance sintering material or the glass powder of Step c) ranges between 100:5 and 100:15.

5. Process for producing a zinc oxide (ZnO) varistor as defined in one of Claims 1 to 4, **characterized in that** the oxide is a mixture of two or more selected from the group consisting of Bi₂O₃, B₂O₃, Sb₂O₃, Co₂O₃, MnO₂, Cr₂O₃, V₂O₅, ZnO, NiO, and SiO₂.

6. Process for producing a zinc oxide (ZnO) varistor as defined in one of Claims 1 to 5, **characterized in that** a calcination temperature for performing the high-temperature calcination of Step d) ranges between 950°C and 1100°C.

7. Process for producing a zinc oxide (ZnO) varistor as defined in one of claims Claim 1 to 5, **characterized in that** Step a) comprises immersing ZnO powder in a solution containing the doping ions, and drying and calcinating the immersed ZnO powder in air, in argon gas, or in a gas containing hydrogen or carbon monoxide to produce the ZnO grains doped with one or more said ions.

8. Process for producing a zinc oxide (ZnO) varistor as defined in Claim 7, **characterized in that** a calcination temperature for performing the high-temperature calcination of Step d) ranges between 850°C and 940°C.
